(19) **Europäisches Patentamt / European Patent Office / Office européen des brevets**

(11) **EP 4 541 671 B1**

(12) **EUROPEAN PATENT SPECIFICATION**

(45) Date of publication and mention
of the grant of the patent:
**08.07.2026 Bulletin 2026/28**

(21) Application number: **23203836.4**

(22) Date of filing: **16.10.2023**

(51) International Patent Classification (IPC):
*B60T 1/10* (2006.01)     *B60L 7/10* (2006.01)
*B60L 7/18* (2006.01)     *B60L 7/26* (2006.01)
*B60L 15/20* (2006.01)    *B60T 8/17* (2006.01)
*B60T 8/1755* (2006.01)   *B60T 8/26* (2006.01)
*B60W 30/18* (2012.01)

(52) Cooperative Patent Classification (CPC):
**B60T 1/10; B60L 7/10; B60L 7/18; B60L 7/26;
B60L 15/2009; B60L 15/2045; B60T 7/20;
B60T 8/1708; B60T 8/1887; B60W 30/18127;**
B60T 2270/604

(54) **UNDERSTEER MITIGATION FOR ELECTRIC TRACTOR-TRAILER VEHICLE COMBINATIONS**

UNTERSTEUERUNGSMINDERUNG FÜR ELEKTRISCHE ZUGFAHRZEUG-ANHÄNGER KOMBINATIONEN

ATTÉNUATION DE SOUS-VIRAGE POUR COMBINAISONS TRACTEUR-REMORQUE ÉLECTRIQUES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**23.04.2025 Bulletin 2025/17**

(73) Proprietor: **VOLVO TRUCK CORPORATION
405 08 Göteborg (SE)**

(72) Inventors:
• **GELSO, Esteban
  SE-421 51 VÄSTRA FRÖLUNDA (SE)**
• **ERDINC, Umur
  SE-413 26 GÖTEBORG (SE)**

• **SADEGHI KATI, Maliheh
  SE-433 51 ÖJERSJÖ (SE)**
• **LAINE, Leo
  SE-414 84 GÖTEBORG (SE)**

(74) Representative: **Kransell & Wennborg KB
P.O. Box 2096
403 12 Göteborg (SE)**

(56) References cited:
WO-A1-2022/184258      WO-A1-2022/253411
DE-A1- 102019 200 820  US-A1- 2019 285 501
US-A1- 2023 068 987    US-A1- 2023 242 121
US-B2- 10 131 330      US-B2- 10 336 195
US-B2- 6 668 225       US-B2- 7 093 912

## Description

### TECHNICAL FIELD

The invention relates generally to vehicle motion management. In particular aspects, the invention relates to understeer mitigation for an electric tractor trailer combination vehicle. The invention can be applied to heavy-duty vehicles, such as trucks, buses, and construction equipment, among other vehicle types. Although the invention may be described with respect to a particular vehicle, the invention is not restricted to any particular vehicle.

### BACKGROUND

A tractor trailer combination vehicle may start to understeer when entering a sharp turn, especially when there is relatively low friction between the tires and the road surface and the combination vehicle is braked.

A tendency of a tractor trailer combination vehicle to understeer can be mitigated by controlling the braking forces applied by individual wheels, so that the tractor brakes the inside rear wheel, and the trailer brakes an outside wheel.

For an electric vehicle in general, regenerative braking is crucial for the energy efficiency of the vehicle. In an electric tractor trailer combination vehicle, controlling the amount of braking of individual wheels in order to mitigate understeering may result in sub-optimal use of regenerative braking, and thus lower energy efficiency.

It would be desirable to be able to control an electric tractor trailer combination vehicle in such a way that understeering can be mitigated without sacrificing the energy efficiency of the combination vehicle, while fulfilling a braking request.

DE 10 2019 200820 A1 relates to control of the braking torque between the front axle and the rear axle of a vehicle.

US 7 093 912 B2 relates to a method and system to control regenerative braking during the operation of a yaw stability control system.

US 10 336 195 B2 relates to a vehicle control apparatus capable of stabilizing a behavior of a vehicle when a regenerative braking force is generated.

US 10 131 330 B2 relates to systems, vehicles, and methods for controlling an application of a plurality of trailer brakes

US 6 668 225 B2 discloses to reduce understeer by selectively applying the brakes. There may be regenerative braking of the wheels of the trailer.

### SUMMARY

According to a first aspect of the invention, there is provided a computer system as defined by claim 1. The first aspect of the invention may seek to enable control of an electric tractor trailer combination vehicle in such a way that understeering can be mitigated without sacrificing the energy efficiency of the combination vehicle, while fulfilling a braking request. A technical benefit may include to mitigate understeer of the combination vehicle while at the same time increasing regeneration of electrical energy. The second braking command may be provided in response to the determination that the understeer tendency of the vehicle during braking is higher than the first understeer tendency threshold. The increase/decrease of the braking forces according to the instructions encoded in the second braking command are in relation to the braking forces according to the instructions encoded in the first braking command. Through the instructions encoded in the second braking command, the combined braking force thus continues to fulfill the braking request, while redistributing the braking forces on the different axles in such a way that the understeer tendency is reduced. The set of vehicle parameters may, for example, include at least one of a longitudinal speed of the vehicle, a steering angle for the vehicle, a longitudinal distance between the front axle and the rear drive axle of the tractor, a yaw rate of the tractor, an articulation angle of the vehicle, coupling forces in the articulated coupling, a side slip angle, a mass of the vehicle, a radius of curvature of the current driving path, and a friction coefficient of the road surface, etc. At least on the rear drive axle of the tractor, the braking force may be substantially evenly distributed among the wheels driven by the axle. This may provide for the use of a simpler and more robust electric power train, with a single electric motor for the rear drive axle of the tractor. The understeer tendency may be mitigated more efficiently by additionally controlling the braking force on at least one axle of the trailer.

Optionally in some examples, including in at least one preferred example, the processing circuitry may be further configured to: receive a second set of vehicle parameters after having provided the second braking command; determine, based on the second set of vehicle parameters, that the understeer tendency of the vehicle during braking is lower than a predefined second understeer tendency threshold, lower than the first understeer tendency threshold; and provide a third braking command encoding instructions to decrease the braking force on the rear drive axle of the tractor, and increase the braking force on the front axle of the tractor, so that the combined braking force fulfills the braking request. A technical benefit may include that a tendency for excessive oversteering can be prevented, whereby the risk of a potentially dangerous situation, such as jackknifing, can be reduced.

Optionally in some examples, including in at least one preferred example, the processing circuitry may be further configured to: receive a third set of vehicle parameters after having provided the second braking command; determine, based on the third set of vehicle parameters that that an oversteer tendency of the vehicle during braking is higher than a predefined oversteer tendency threshold; and provide a fourth braking command encoding instructions to reduce the braking force on the rear drive axle of the tractor. A technical benefit may include that a tendency for excessive oversteering can be prevented, whereby the risk of a potentially dangerous situation, such as jack-knifing, can be reduced. In examples where the second braking command additionally encodes instructions to control braking on at least one axle of the trailer, the fourth braking command may additionally encode instructions to increase the braking force on the at least one axle of the trailer.

Optionally in some examples, including in at least one preferred example, the fourth braking command may further encode instructions to increase the braking force on the front axle of the tractor, so that the combined braking force fulfills the braking request. A technical benefit may include that the vehicle may react faster on the fourth braking command when more axles are involved in the braking.

Optionally in some examples, including in at least one preferred example, the fourth braking command may further encode instructions to increase the braking force on the at least one axle of the trailer. A technical benefit may include that the vehicle may react faster on the fourth braking command when more axles are involved in the braking.

Optionally in some examples, including in at least one preferred example, the processing circuitry may be further configured to: receive a propulsion request for propelling a vehicle including an electrically powered tractor with a first electric machine coupled to a rear drive axle of the tractor, a second electric machine coupled to a front drive axle of the tractor, and a trailer coupled to the tractor by an articulated coupling; provide a first propulsion command encoding instructions to control the first electric machine and the second electric machine to provide a combined propulsion force fulfilling the propulsion request; receive a fourth set of vehicle parameters after having provided the first propulsion command; determine, based on the fourth set of vehicle parameters, that an understeer tendency of the vehicle during propulsion is higher than a predefined third understeer tendency threshold; and provide a second propulsion command encoding instructions to control the first electric machine and the second electric machine to increase a propulsion force on the rear drive axle of the tractor, and decrease a propulsion force on the front axle of the tractor, so that the combined propulsion force fulfills the propulsion request. A technical benefit may include to mitigate understeer of the combination vehicle also during propulsion of the vehicle.

Optionally, the computer system according to the first aspect of the invention may be comprised in a vehicle.

Optionally in some examples, including in at least one preferred example, the vehicle may include an electrically powered tractor with an electric machine coupled to a rear drive axle of the tractor.

According to a second aspect of the invention, there is provided a computer-implemented method as defined by claim 10. The second aspect of the invention may seek to enable control of an electric tractor trailer combination vehicle in such a way that understeering can be mitigated without sacrificing the energy efficiency of the combination vehicle, while fulfilling a braking request. A technical benefit may include to mitigate understeer of the combination vehicle while at the same time increasing regeneration of electrical energy. The second braking command may be provided in response to the determination that the understeer tendency of the vehicle during braking is higher than the first understeer tendency threshold. The increase/decrease of the braking forces according to the instructions encoded in the second braking command are in relation to the braking forces according to the instructions encoded in the first braking command. Through the instructions encoded in the second braking command, the combined braking force thus continues to fulfill the braking request, while redistributing the braking forces on the different axles in such a way that the understeer tendency is reduced. The set of vehicle parameters may, for example, include at least one of a longitudinal speed of the vehicle, a steering angle for the vehicle, a longitudinal distance between the front axle and the rear drive axle of the tractor, a yaw rate of the tractor, an articulation angle of the vehicle, coupling forces in the articulated coupling, a side slip angle, a mass of the vehicle, a radius of curvature of the current driving path, and a friction coefficient of the road surface, etc. At least on the rear drive axle of the tractor, the braking force may be substantially evenly distributed among the wheels driven by the axle. This may provide for the use of a simpler and more robust electric power train, with a single electric motor for the rear drive axle of the tractor. The understeer tendency may be mitigated more efficiently by controlling the braking force on at least one axle of the trailer.

Optionally in some examples, including in at least one preferred example, the method may further comprise: receiving, by the computer system, a second set of vehicle parameters after having provided the second braking command; determining, by the computer system, based on the second set of vehicle parameters, that the understeer tendency of the vehicle during braking is lower than a predefined second understeer tendency threshold, lower than the first understeer tendency threshold; and providing, by the computer system, a third braking command encoding instructions to decrease the braking force on the rear drive axle of the tractor, and increase the braking force on the front axle of the tractor, so that the combined braking force fulfills the braking request. A technical benefit may include that a tendency for excessive oversteering can be prevented, whereby the risk of a potentially dangerous situation, such as jack-knifing, can be reduced.

Optionally in some examples, including in at least one preferred example, the processing circuitry may be further configured to: receive a third set of vehicle parameters after having provided the second braking command; determine, based on the third set of vehicle parameters that that an oversteer tendency of the vehicle during braking is higher than a predefined oversteer tendency threshold; and provide a fourth braking command encoding instructions to reduce the braking force on the rear drive axle of the tractor. A technical benefit may include that a tendency for excessive oversteering can be prevented, whereby the risk of a potentially dangerous situation, such as jack-knifing, can be reduced. In examples where the second braking command additionally encodes instructions to control braking on at least one axle of the trailer, the fourth braking command may additionally encode instructions to increase the braking force on the at least one axle of the trailer.

Optionally in some examples, including in at least one preferred example, the fourth braking command may further encode instructions to increase the braking force on the front axle of the tractor, so that the combined braking force fulfills the braking request. A technical benefit may include that the vehicle may react faster on the fourth braking command when more axles are involved in the braking.

Optionally in some examples, including in at least one preferred example, the fourth braking command may further encode instructions to increase the braking force on the at least one axle of the trailer. A technical benefit may include that the vehicle may react faster on the fourth braking command when more axles are involved in the braking.

Optionally in some examples, including in at least one preferred example, the method may further include: receiving, by the computer system, a propulsion request for propelling a vehicle including an electrically powered tractor with a first electric machine coupled to a rear drive axle of the tractor, a second electric machine coupled to a front drive axle of the tractor, and a trailer coupled to the tractor by an articulated coupling; providing, by the computer system, a first propulsion command encoding instructions to control the first electric machine and the second electric machine to provide a combined propulsion force fulfilling the propulsion request; receiving, by the computer system, a fourth set of vehicle parameters after having provided the first propulsion command; determining, based on the fourth set of vehicle parameters, that an understeer tendency of the vehicle during propulsion is higher than a predefined third understeer tendency threshold; and providing, by the computer system, a second propulsion command encoding instructions to control the first electric machine and the second electric machine to increase a propulsion force on the rear drive axle of the tractor, and decrease a propulsion force on the front axle of the tractor, so that the combined propulsion force fulfills the propulsion request. A technical benefit may include to mitigate understeer of the combination vehicle also during propulsion of the vehicle.

According to a third aspect of the invention, there is provided a computer program product comprising program code for performing, when executed by the processing circuitry, the method of the second aspect of the invention.

According to a fourth aspect of the invention, there is provided a non-transitory computer-readable storage medium comprising instructions, which when executed by the processing circuitry, cause the processing circuitry to perform the method of the second aspect of the invention.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the invention as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

FIG. 1 is an exemplary vehicle according to an example.
FIG. 2 is an exemplary computer system according to an example.
FIG. 3 is an exemplary illustration of an exemplary driving situation.
FIG. 4 is an exemplary method according to an example.
FIG. 5 is an exemplary diagram of the understeer gradient as a function of time.
FIG. 6 is an exemplary illustration of simulated trajectories for a vehicle.
FIG. 7 is an exemplary method according to an example.
FIG. 8 is an exemplary diagram of the understeer gradient as a function of time.
FIG. 9 is an exemplary method according to an example.
FIG. 10 is an exemplary diagram of the understeer gradient as a function of time.
FIG. 11 is a schematic diagram of an exemplary computer system for implementing examples disclosed herein, according to an example.

## DETAILED DESCRIPTION

The detailed description set forth below provides information and examples of the disclosed technology with sufficient detail to enable those skilled in the art to practice the invention.

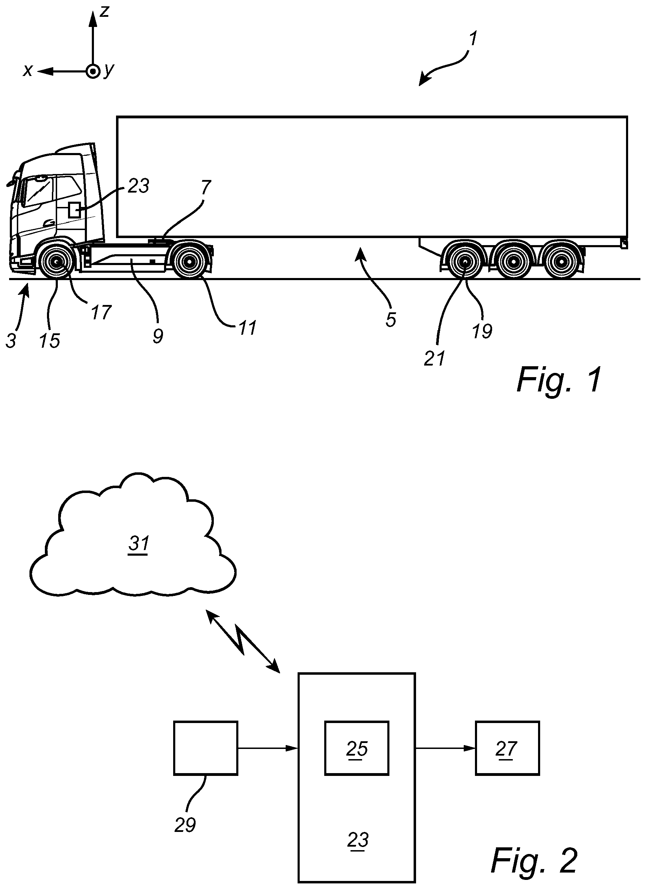

Fig. 1 is an exemplary vehicle combination 1 according to an example. Referring to Fig. 1, the vehicle combination comprises a vehicle in the form of an electric vehicle (EV) tractor 3, and a trailer 5 coupled to the EV tractor 3. In the example in Fig. 1, the trailer 5 is a semitrailer that is coupled to the EV tractor 3 by means of a fifth-wheel coupling 7. The EV tractor 3 has a battery pack 9, driving wheels 11 on a rear drive axle 13 coupled to a first electric machine (not visible in Fig. 1), and front wheels 15 on a front axle 17. According to examples, the front axle 17 may be a front drive axle coupled to a second electric machine (not visible in Fig. 1). Although not visible in Fig. 1, the rear drive axle 13 and the front axle 17 are provided with friction brakes, as is *per se* known, and it is also possible to control a braking force on the rear drive axle 13 using regeneration, as is *per se* known. In examples where the front axle 17 is a front drive axle coupled to a second electric machine, it is also possible to control a braking force on the front axle 17 using regeneration, as is *per se* known. The trailer 5 has at wheels 19 on at least one trailer axle 21. Although not visible in Fig. 1, the at least one trailer axle 21 is provided with friction brakes, as is *per se* known. Further, the EV tractor 3 comprises a computer system 23. Fig. 1 shows one example of a vehicle combination 1 having a fifth-wheel coupling 7 for articulated coupling between a tractor and a semitrailer type load. It should be noted that the present invention relates to other vehicle combinations with other configurations.

Fig. 2 is an exemplary computer system 23 according to an example. The computer system 23 comprises processing circuitry 25, and is coupled to a braking system 27 of the vehicle 1, and to at least one data source. Exemplary data sources are represented in Fig. 2 by a sensing system 29 comprised in the vehicle 1 and a remote data source represented by the cloud 31 in Fig. 2. It should be noted that the computer system 23 need not necessarily be included in the EV tractor 3, but that it may be at least partly included in another part of the vehicle combination 1, or partly or wholly included in a cloud solution, so that processing by the processing circuitry 25 is performed remotely from the vehicle combination 1. If included in the EV tractor 3, the computer system 23 may be provided in the form of a centralized vehicle control unit, or as (a part of) a distributed vehicle control system, which may, for example, include a vehicle motion management control unit and/or a braking system control unit.

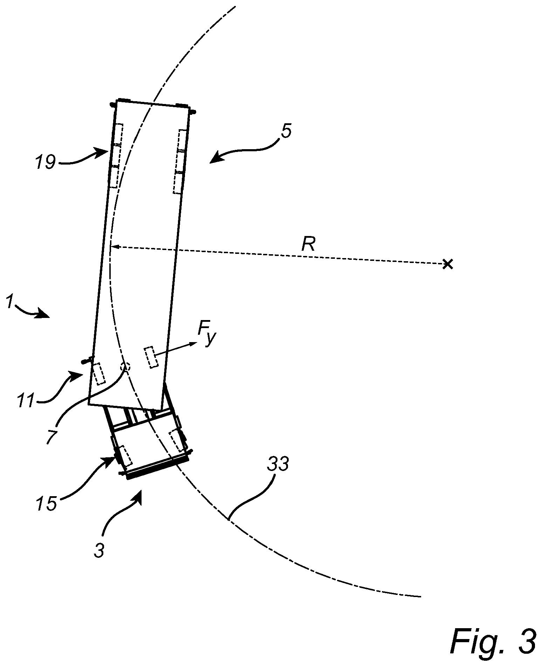

Now consider Fig. 3, which is an exemplary illustration of an exemplary driving situation. In the driving situation in Fig. 3, the present path 33 of the vehicle combination 1 is a non-straight path with a radius of curvature R. In this exemplary vehicle combination 1, the understeering characteristics of the tractor 3 can be represented by the well-known parameter understeering gradient. The understeering gradient $K_{us}$ for the tractor 3 can be determined according to the following formula:

$$K_{us,tractor} = \frac{v_{x,1}\tan\delta - L_1\omega_1}{v_{x,1}^2\omega_1},$$

where $v_{x1}$ is the longitudinal speed of the tractor 3, $\delta$ is the steering angle of the tractor 3, $L_1$ is the wheelbase of the tractor 3, and $\omega_1$ is the yaw rate of the tractor 3.

When the vehicle combination 1 is in a sharp curve, and the vehicle combination 1 is braked using a standard braking strategy, where the total braking force is substantially equally distributed among the axles (the rear drive axle 13 of the tractor 3, the front axle 17 of the tractor, and at least one axle 21 of the trailer 5), the vehicle combination 1 can start to understeer heavily, corresponding to a high understeering gradient $K_{us}$, especially if the friction between the tires of the wheels and the road surface is relatively low, such as in the case of wet asphalt, snow, ice, leaves, oil, etc. According to aspects of the present invention, this tendency to understeer is at least partly mitigated, without sacrificing the energy efficiency of the combination vehicle 1, comprising an EV tractor 3, as will be explained in greater detail in the following.

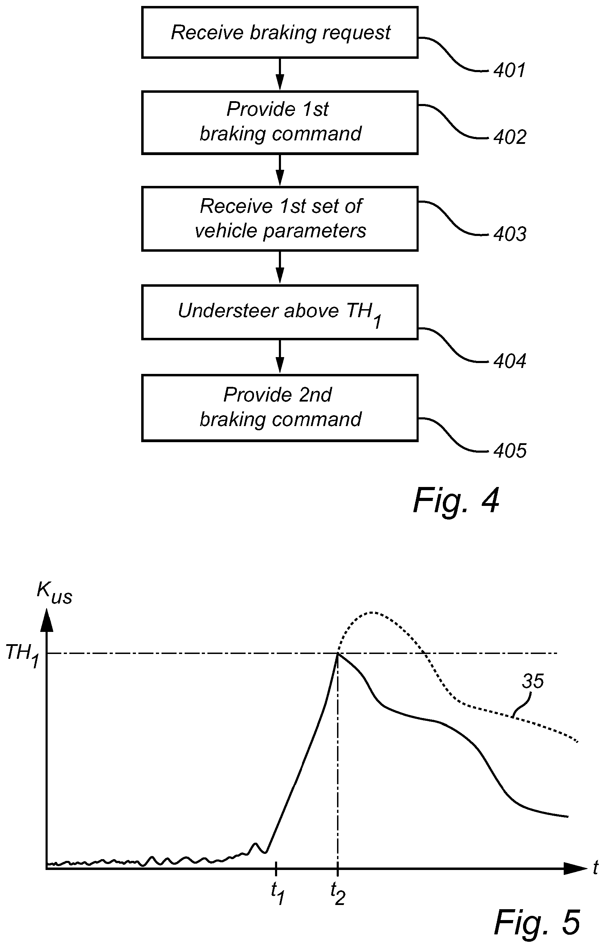

Fig. 4 is an exemplary computer implemented method of reducing understeer of a vehicle including an electrically powered tractor with an electric machine coupled to a rear drive axle of the tractor, and a trailer coupled to the tractor by an articulated coupling. Referring to the flow-chart in fig 4, the method comprises receiving 401, by the computer system 23, a braking request for braking the vehicle 1.

In response to receiving the braking request, the computer system 23 provides 402 a first braking command encoding instructions to control braking on at least the front axle 17 of the tractor 3, and on the rear drive axle 13 of the tractor 3 to provide a combined braking force fulfilling the braking request. The first braking command may encode instructions specifying how to control the braking, for example, using a certain distribution among the axles and/or using a certain combination of different vehicle retardation sub-systems, such as friction brakes, and regeneration using at least one electrical machine, etc. For instance, the first braking command may encode instructions to distribute the total combined braking force substantially evenly among the axles (the rear drive axle 13 of the tractor 3, the front axle 17 of the tractor, and at least one axle 21 of the trailer 5).

Referring now briefly to Fig. 5, which is an exemplary diagram of the understeer gradient $K_{us}$ as a function of time t, the first braking command may be provided at a first time $t_1$ indicated in Fig. 5.

After having provided the first braking command, the computer system 23 receives 403 a first set of vehicle parameters. Such a set of vehicle parameters, including one or more vehicle parameters, may be received from, for example, one or more sensor(s) comprised in a sensing system 29 of the vehicle 1. Alternatively, or in combination, the set of vehicle parameters may be received from a data source that is remote from the vehicle 1. Such a data source 31 may be cloud-based. The set of vehicle parameters may, for example, include at least one of a longitudinal speed of the vehicle 1, a steering angle for the vehicle 1, a longitudinal distance (distance in the x-direction) between the front axle 17 and the rear drive axle 13 of the tractor 3, a yaw rate of the tractor 3, an articulation angle of the vehicle 1, coupling forces in the articulated coupling, a side slip angle, a mass of the vehicle 1, a radius of curvature of the current driving path, and a friction coefficient of the road surface, etc. By yaw rate should be understood angular speed in the yaw plane. Referring briefly to Fig. 1, the yaw plane refers to the xy-plane using well-established geometry conventions for vehicle motion management, where the x-direction refers to the horizontal longitudinal direction for the vehicle, the y-direction refers to the horizontal lateral (sideways) direction for the vehicle, and the z-direction refers to the vertical direction for the vehicle.

The first set of vehicle parameters is then evaluated by the computer system 23, for example by calculating the understeering gradient $K_{us}$ as explained further above with reference to Fig. 3. For instance, current values of the one or more vehicle parameter(s) of the first set of vehicle parameters may be received over time, so that a development over time of the understeering gradient $K_{us}$ can be determined by the processing circuitry 25 of the computer system 23, as is schematically indicated in Fig. 5. As can be seen in Fig. 5, execution of the first braking command, starting at the first time $t_1$, here results in a sharp increase of the understeering gradient $K_{us}$.

When it is determined 404, by the computer system 23, based on current values of the one or more vehicle parameter(s) of the first set of vehicle parameters, that an understeer tendency of the vehicle during braking is higher than a predefined first understeer tendency threshold, the computer system provides 405 a second braking command encoding instructions to increase a braking force on the rear drive axle 13 of the tractor 3 using regeneration, and decrease a braking force on the front axle 17 of the tractor 3, so that the combined braking force continues to fulfill the braking request.

Referring again to the example in Fig. 5, the understeering gradient $K_{us}$ becomes higher than a predefined first understeer tendency threshold $TH_1$ at a second time $t_2$. At this second time $t_2$, the second braking command is provided as described above and executed by the braking system 27 of the combination vehicle 1, resulting in lower understeering gradient $K_{us}$ than would have been the case if the first braking command would have continued to be provided and executed, as is represented by the dashed line 35 in Fig. 5.

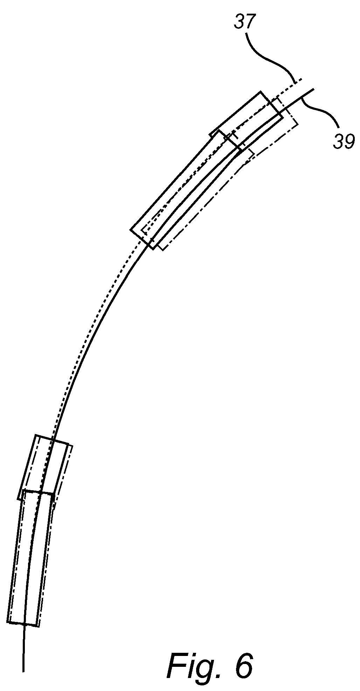

Fig. 6 is an exemplary illustration of simulated trajectories for a combination vehicle 1. The simulation is based on the following exemplary case:

Road surface: snow (friction coefficient 0.3)
Radius of curvature: 72 m
Accelerating up to 52 km/h
Then brake with two different strategies with substantially the same retardations:

- "Standard" braking strategy, where the total braking force is substantially equally distributed among the axles (the rear drive axle 13 of the tractor 3, the front axle 17 of the tractor, and at least one axle 21 of the trailer 5).
- Understeer mitigation braking strategy where the braking force on the rear drive axle 13 of the tractor 3 has been increased to 0.5 friction utilization, and the braking force on the front axle 17 and the at least one axle 21 of the trailer 5 have been reduced to substantially maintain the same combined braking force.

With the standard braking strategy, the vehicle combination 1 followed the dashed trajectory 37 in Fig. 6, and with the understeer mitigation braking strategy, the vehicle combination 1 followed the solid line trajectory 39 in Fig. 6. Comparing these trajectories, it is clear that the understeer tendency has been reduced by the use of the understeer mitigation braking strategy.

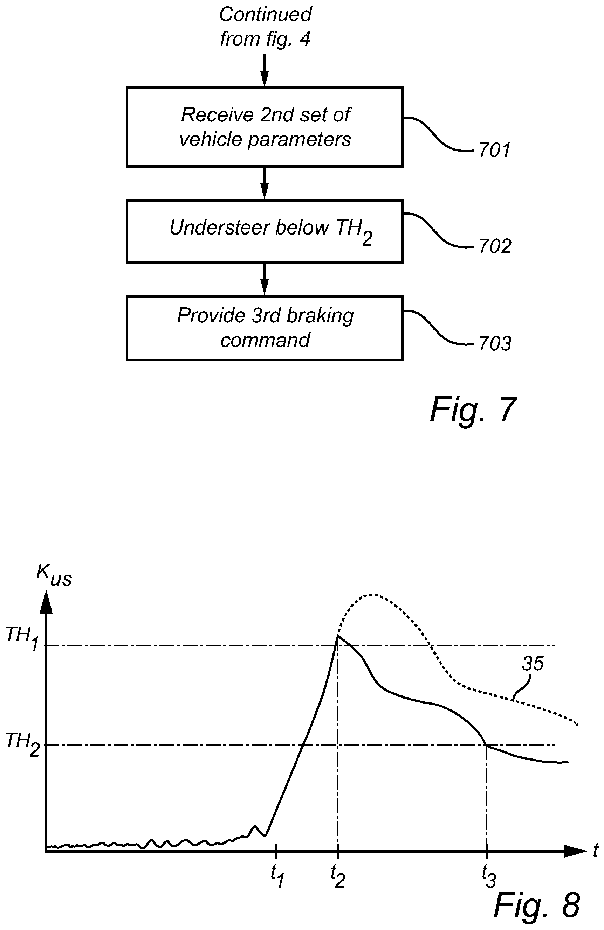

Fig. 7 is an exemplary computer implemented method of reducing understeer of a vehicle including an electrically powered tractor with an electric machine coupled to a rear drive axle of the tractor, and a trailer coupled to the tractor by an articulated coupling. Referring to the flow-chart in fig. 7, the method is a continuation of the method described above with reference to fig. 4.

After having provided 405 in fig. 4 the second braking command, the computer system 23 receives 701 a second set of vehicle parameters. As was explained above for the first set of vehicle parameters, such a set of vehicle parameters, including one or more vehicle parameters, may be received from, for example, one or more sensor(s) comprised in a sensing system 29 of the vehicle 1. Alternatively, or in combination, the second set of vehicle parameters may be received from a data source that is remote from the vehicle 1. Such a data source 31 may be cloud-based. The set of vehicle parameters may, for example, include at least one of a longitudinal speed of the vehicle 1, a steering angle for the vehicle 1, a longitudinal distance (distance in the x-direction) between the front axle 17 and the rear drive axle 13 of the tractor 3, a yaw rate of the tractor 3, an articulation angle of the vehicle 1, coupling forces in the articulated coupling, a side slip angle, a mass of the vehicle 1, a radius of curvature of the current driving path, and a friction coefficient of the road surface, etc. By yaw rate should be understood angular speed in the yaw plane. Referring briefly to Fig. 1, the yaw plane refers to the xy-plane using well-established geometry conventions for vehicle motion management, where the x-direction refers to the horizontal longitudinal direction for the vehicle, the y-direction refers to the horizontal lateral (sideways) direction for the vehicle, and the z-direction refers to the vertical direction for the vehicle.

The second set of vehicle parameters is then evaluated by the computer system 23, for example by calculating the understeering gradient $K_{us}$ as explained further above with reference to Fig. 3. For instance, current values of the one or more vehicle parameter(s) of the second set of vehicle parameters may be received over time, so that a development over time of the understeering gradient $K_{us}$ can be determined by the processing circuitry 25 of the computer system 23, as is schematically indicated in Fig. 8.

When it is determined 702, by the computer system 23, based on current values of the one or more vehicle parameter(s) of the second set of vehicle parameters, that an understeer tendency of the vehicle during braking is lower than a predefined second understeer tendency threshold $TH_2$, lower than the first understeer tendency threshold $TH_1$, the computer system provides 703 a third braking command encoding instructions to decrease the braking force on the rear drive axle 13 of the tractor 3, and increase the braking force on the front axle 17 of the tractor 3, so that the combined braking force continues to fulfill the braking request.

Referring again to the example in Fig. 8, the understeering gradient $K_{us}$ becomes lower than the predefined second understeer tendency threshold $TH_2$ at a third time $t_3$. At this third time $t_3$, the third braking command is provided as described above and executed by the braking system 27 of the combination vehicle 1. This results in a redistribution of the braking force towards a more uniform distribution, such as closer to the above-described "standard" braking strategy, while maintaining the understeer tendency of the vehicle 1 at an acceptable level. With the more uniform distribution, the stability of the vehicle 1 may be increased, and tire wear may be more evenly distributed, providing for reduced maintenance of the vehicle 1. The understeering gradient $K_{us}$ is still lower than would have been the case if the first braking command would have continued to be provided and executed, as is represented by the dashed line 35 in Fig. 8, but higher after the third time $t_3$ than would have been the case if the second braking command would have been maintained.

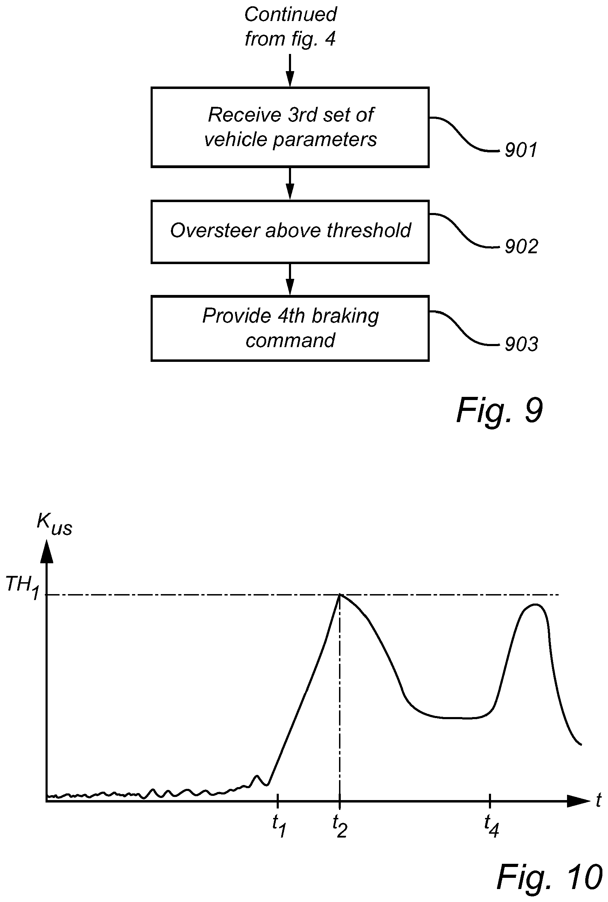

Fig. 9 is an exemplary computer implemented method of reducing understeer of a vehicle including an electrically powered tractor with an electric machine coupled to a rear drive axle of the tractor, and a trailer coupled to the tractor by an articulated coupling. Referring to the flow-chart in fig. 9, the method is a continuation of the method described above with reference to fig. 4.

After having provided 405 in fig. 4 the second braking command, the computer system 23 receives 901 a third set of vehicle parameters. As was explained above for the first set of vehicle parameters, such a set of vehicle parameters, including one or more vehicle parameters, may be received from, for example, one or more sensor(s) comprised in a sensing system 29 of the vehicle 1. Alternatively, or in combination, the third set of vehicle parameters may be received from a data source that is remote from the vehicle 1. Such a data source 31 may be cloud-based. The set of vehicle parameters may, for example, include at least one of a longitudinal speed of the vehicle 1, a steering angle for the vehicle 1, a longitudinal distance (distance in the x-direction) between the front axle 17 and the rear drive axle 13 of the tractor 3, a yaw rate of the tractor 3, an articulation angle of the vehicle 1, coupling forces in the articulated coupling, a side slip angle, a mass of the vehicle 1, a radius of curvature of the current driving path, and a friction coefficient of the road surface, etc. By yaw rate should be understood angular speed in the yaw plane. Referring briefly to Fig. 1, the yaw plane refers to the xy-plane using well-established geometry conventions for vehicle motion management, where the x-direction refers to the horizontal longitudinal direction for the vehicle, the y-direction refers to the horizontal lateral (sideways) direction for the vehicle, and the z-direction refers to the vertical direction for the vehicle.

The third set of vehicle parameters is then evaluated by the computer system 23. In this case, the third set of vehicle parameters may, for example, include an articulation angle of the vehicle combination 1, that is, an angle in the yaw plane between the longitudinal direction of the tractor 3 and the longitudinal direction of the trailer 5. An increasing articulation angle may be an indication of an increasing oversteer tendency, which may in turn be an indication of an increased risk of so-called jack-knifing.

When it is determined 902, by the computer system 23, based on current values of the one or more vehicle parameter(s) of the third set of vehicle parameters that an oversteer tendency of the vehicle during braking is higher than a predefined oversteer tendency threshold, the computer system provides 903 a fourth braking command encoding instructions to reduce the braking force on the rear drive axle 13 of the tractor 3. In examples where the third set of vehicle parameters includes the articulation angle of the vehicle 1, the oversteer tendency threshold may, for example, by given in the form of a threshold articulation angle, and the fourth braking command may be provided in response to a finding that the articulation angle has become larger than the threshold articulation angle.

Referring to the example in Fig. 10, the oversteer tendency may become higher than the predefined oversteer tendency threshold at a fourth time $t_4$. At this fourth time $t_4$, the fourth braking command is provided as described above and executed by the braking system 27 of the combination vehicle 1. This results in a redistribution of the braking force towards a more uniform distribution, such as closer to the above-described "standard" braking strategy, thereby at least temporarily increasing the understeer tendency of the vehicle 1. Hereby, the oversteer tendency of the vehicle 1 can be reduced, which may prevent jack-knifing.

So far, examples of a computer system and computer implemented method have been provided for controlling the braking configuration of the vehicle 1 to achieve a desirable combination of understeering handling and energy efficiency of the vehicle. According to other examples, a propulsion configuration of the vehicle 1 may additionally be controlled with the aim of achieving a desirable understeering handling. However, a detailed description of the control of the propulsion configuration is not provided herein, as the skilled person will be able to suitably control the propulsion based on the examples provided herein for braking, and his/her own knowledge.

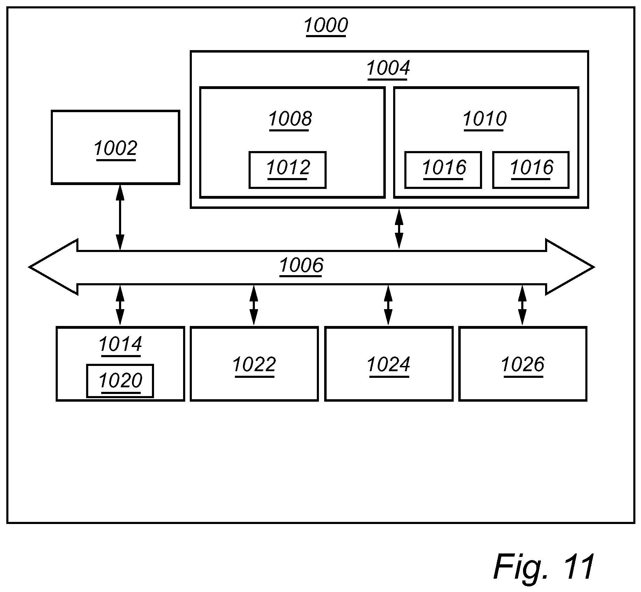

Fig. 11 is a schematic diagram of a computer system 1000 for implementing examples disclosed herein, such as for implementing examples of the control circuitry 23 of the drive train arrangement 5 according to examples. The computer system 1000 is adapted to execute instructions from a computer-readable medium to perform these and/or any of the functions or processing described herein. The computer system 1000 may be connected (e.g., networked) to other machines in a LAN, an intranet, an extranet, or the Internet. While only a single device is illustrated, the computer system 1000 may include any collection of devices that individually or jointly execute a set (or multiple sets) of instructions to perform any one or more of the methodologies discussed herein. Accordingly, any reference in the invention and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or indication processing or for executing computer code stored in memory 1004. The processing circuitry 1002 may, for example, include a general-purpose processor, an application specific processor, a Digital indication Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the invention. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present invention.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this invention belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present invention is not limited to the aspects described above and illustrated in the drawings; rather, the skilled person will recognize that many changes and modifications may be made within the scope of the present invention and appended claims. In the drawings and specification, there have been disclosed aspects for purposes of illustration only and not for purposes of limitation, the scope of the invention being set forth in the following claims.

**Claims**

1. A computer system (23) comprising processing circuitry (25) configured to:

   receive a braking request for braking a vehicle combination (1) including an electrically powered tractor (3) with an electric machine coupled to a rear drive axle of the tractor (3), and a trailer (5) coupled to the tractor (3) by an articulated coupling (7);
   provide a first braking command encoding instructions to control braking on at least a front axle (17) of the tractor (3), on the rear drive axle of the tractor (3), and on at least one axle (21) of the trailer (5), to provide a combined braking force fulfilling the braking request;
   receive a first set of vehicle parameters;
   determine, based on the first set of vehicle parameters, that an understeer tendency of the vehicle combination (1) during braking is higher than a predefined first understeer tendency threshold; and
   provide a second braking command encoding instructions to increase a braking force on the rear drive axle of the tractor (3) using regeneration, decrease a braking force on the front axle (17) of the tractor (3), and decrease a braking force on the at least one axle (21) of the trailer (5), so that the combined braking force fulfills the braking request

2. The computer system (23) of claim 1, wherein the processing circuitry (25) is further configured to:

   receive a second set of vehicle parameters after having provided the second braking command;
   determine, based on the second set of vehicle parameters, that the understeer tendency of the vehicle combination (1) during braking is lower than a predefined second understeer tendency threshold, lower than the first understeer tendency threshold; and
   provide a third braking command encoding instructions to decrease the braking force on the rear drive axle of the tractor (3), and increase the braking force on the front axle (17) of the tractor (3), so that the combined braking force fulfills the braking request.

3. The computer system (23) of any of claims 1 to 2, wherein the processing circuitry (25) is further configured to:

   receive a third set of vehicle parameters after having provided the second braking command;
   determine, based on the third set of vehicle parameters that that an oversteer tendency of the vehicle combination (1) during braking is higher than a predefined oversteer tendency threshold; and
   provide a fourth braking command encoding instructions to reduce the braking force on the rear drive axle of the tractor (3).

4. The computer system (23) of claim 3, wherein the fourth braking command further encodes instructions to increase the braking force on the front axle (17) of the tractor (3), so that the combined braking force fulfills the braking request.

5. The computer system (23) of claim 4, wherein the fourth braking command further encodes instructions to increase the braking force on the at least one axle (21) of the trailer (5).

6. The computer system (23) of any one of claims 1 to 5, wherein the processing circuitry (25) is further configured to:

   receive a propulsion request for propelling a vehicle combination (1) including an electrically powered tractor (3) with a first electric machine coupled to a rear drive axle of the tractor (3), a second electric machine coupled to a front drive axle (17) of the tractor (3), and a trailer (5) coupled to the tractor (3) by an articulated coupling (7);
   provide a first propulsion command encoding instructions to control the first electric machine and the second electric machine to provide a combined propulsion force fulfilling the propulsion request;
   receive a fourth set of vehicle parameters after having provided the first propulsion command;
   determine, based on the fourth set of vehicle parameters, that an understeer tendency of the vehicle combination (1) during propulsion is higher than a predefined third understeer tendency threshold; and
   provide a second propulsion command encoding instructions to control the first electric machine and the second electric machine to increase a propulsion force on the rear drive axle of the tractor (3), and decrease a propulsion force on the front axle (17) of the tractor (3), so that the combined propulsion force fulfills the propulsion request.

7. A vehicle combination (1) comprising the computer system of any of claims 1 to 6.

8. The vehicle combination (1) of claim 7, wherein the vehicle combination (1) includes an electrically powered tractor (3) with an electric machine coupled to a rear drive axle of the tractor (3).

9. The vehicle combination (1) of claim 7 or 8, wherein the vehicle combination (1) includes an electrically powered tractor (3) with a first electric machine coupled to a rear drive axle of the tractor (3), a second electric machine coupled to a front drive axle (17) of the tractor (3).

10. A computer-implemented method of reducing understeer of a vehicle combination (1) including an electrically powered tractor (3) with an electric machine coupled to a rear drive axle of the tractor (3), and a trailer (5) coupled to the tractor (3) by an articulated coupling (7), the method comprising:

   receiving (401), by a computer system (23), a braking request for braking the vehicle combination (1);
   providing (402), by the computer system (23), a first braking command encoding instructions to control braking on at least a front axle (17) of the tractor (3), on the rear drive axle of the tractor (3), and on at least one axle (21) of the trailer (5), to provide a combined braking force fulfilling the braking request;
   receiving (403), by the computer system (23), a first set of vehicle parameters;
   determining (404), by the computer system (23), based on the first set of vehicle parameters, that an understeer tendency of the vehicle combination (1) during braking is higher than a predefined first understeer tendency threshold; and
   providing (405), by the computer system (23), a second braking command encoding instructions to increase a braking force on the rear drive axle of the tractor (3) using regeneration, decrease a braking force on the front axle (17) of the tractor (3), and decrease a braking force on the at least one axle (21) of the trailer (5), so that the combined braking force fulfills the braking request.

11. The method of claim 10, wherein the method further comprises:

   receiving (701), by the computer system (23), a second set of vehicle parameters after having provided the second braking command;
   determining (702), by the computer system (23), based on the second set of vehicle parameters, that the understeer tendency of the vehicle combination (1) during braking is lower than a predefined second understeer tendency threshold, lower than the first understeer tendency threshold; and
   providing (703), by the computer system (23), a third braking command encoding instructions to decrease the braking force on the rear drive axle of the tractor (3), and increase the braking force on the front axle (17) of the tractor (3), so that the combined braking force fulfills the braking request.

12. A computer program product comprising program code for performing, when executed by the processing circuitry comprised in the computer system of any of claims 1 to 9, the method of any of claims 10 to 11.

13. A non-transitory computer-readable storage medium comprising instructions, which when executed by the processing circuitry comprised in the computer system of any of claims 1 to 9, cause the processing circuitry to perform the method of any of claims 10 to 11.

**Patentansprüche**

1. Computersystem (23), das eine Verarbeitungsschaltung (25) umfasst, die für Folgendes konfiguriert ist:

   Empfangen einer Bremsanforderung zum Bremsen eines Fahrzeuggespanns (1), das einen elektrisch angetriebenen Sattelschlepper (3) mit einer Elektromaschine, die an die hintere Antriebsachse des Sattelschleppers (3) gekoppelt ist, sowie einen Anhänger (5) enthält, der über eine Gelenkkupplung (7) an den Sattelschlepper (3) gekoppelt ist;
   Bereitstellen eines ersten Bremsbefehls, der Anweisungen umsetzt, um die Bremsung an mindestens einer Vorderachse (17) des Sattelschleppers (3), an der hinteren Antriebsachse des Sattelschleppers (3) und an mindestens einer Achse (21) des Anhängers (5) zu steuern, um eine kombinierte Bremskraft bereitzustellen, die die Bremsanforderung erfüllt;
   Empfangen eines ersten Satzes von Fahrzeugparametern;
   Bestimmen basierend auf dem ersten Satz von Fahrzeugparametern, dass eine Untersteuerungsneigung des Fahrzeuggespanns (1) während der Bremsung höher ist als ein vordefinierter erster Schwellenwert für die Untersteuerungsneigung; und
   Bereitstellen eines zweiten Bremsbefehls, der Anweisungen umsetzt, um eine Bremskraft an der hinteren Antriebsachse des Sattelschleppers (3) unter Verwendung von Rekuperation zu erhöhen, eine Bremskraft an der Vorderachse (17) des Sattelschleppers (3) zu verringern und eine Bremskraft an der mindestens einen Achse (21) des Anhängers (5) zu verringern, so dass die kombinierte Bremskraft die Bremsanforderung erfüllt.

2. Computersystem (23) nach Anspruch 1, wobei die Verarbeitungsschaltung (25) ferner für Folgendes konfiguriert ist:

Empfangen eines zweiten Satzes von Fahrzeugparametern, nachdem der zweite Bremsbefehl bereitgestellt wurde;
Bestimmen basierend auf dem zweiten Satz von Fahrzeugparametern, dass die Untersteuerungsneigung des Fahrzeuggespanns (1) während der Bremsung unter einem vordefinierten zweiten Schwellenwert für die Untersteuerungsneigung liegt, der niedriger ist als der erste Schwellenwert für die Untersteuerungsneigung; und
Bereitstellen eines dritten Bremsbefehls, der Anweisungen umsetzt, um die Bremskraft an der hinteren Antriebsachse des Sattelschleppers (3) zu verringern und die Bremskraft an der Vorderachse (17) des Sattelschleppers (3) zu erhöhen, so dass die kombinierte Bremskraft die Bremsanforderung erfüllt.

3. Computersystem (23) nach einem der Ansprüche 1 bis 2, wobei die Verarbeitungsschaltung (25) ferner für Folgendes konfiguriert ist:

Empfangen eines dritten Satzes von Fahrzeugparametern, nachdem der zweite Bremsbefehl bereitgestellt wurde;
Bestimmen basierend auf dem dritten Satz von Fahrzeugparametern, dass eine Übersteuerungsneigung des Fahrzeuggespanns (1) während der Bremsung höher ist als ein vordefinierter Schwellenwert für die Übersteuerungsneigung; und
Bereitstellen eines vierten Bremsbefehls, der Anweisungen umsetzt, um die Bremskraft an der hinteren Antriebsachse des Sattelschleppers (3) zu reduzieren.

4. Computersystem (23) nach Anspruch 3, wobei der vierte Bremsbefehl ferner Anweisungen umsetzt, um die Bremskraft an der Vorderachse (17) des Sattelschleppers (3) zu erhöhen, so dass die kombinierte Bremskraft die Bremsanforderung erfüllt.

5. Computersystem (23) nach Anspruch 4, wobei der vierte Bremsbefehl ferner Anweisungen umsetzt, um die Bremskraft an der mindestens einen Achse (21) des Anhängers (5) zu erhöhen.

6. Computersystem (23) nach einem der Ansprüche 1 bis 5, wobei die Verarbeitungsschaltung (25) ferner für Folgendes konfiguriert ist:

Empfangen einer Antriebsanforderung zum Antreiben eines Fahrzeuggespanns (1), das einen elektrisch angetriebenen Sattelschlepper (3) mit einer ersten elektrischen Maschine, die an eine hintere Antriebsachse des Sattelschleppers (3) gekoppelt ist, und einer zweiten elektrischen Maschine, die an eine vordere Antriebsachse (17) des Sattelschleppers (3) gekoppelt ist, sowie einen Anhänger (5) enthält, der über eine Gelenkkupplung (7) an den Sattelschlepper (3) gekoppelt ist;
Bereitstellen eines ersten Antriebsbefehls, der Anweisungen umsetzt, um die erste elektrische Maschine und die zweite elektrische Maschine zu steuern, um eine kombinierte Antriebskraft bereitzustellen, die die Antriebsanforderung erfüllt;
Empfangen eines vierten Satzes von Fahrzeugparametern, nachdem der erste Antriebsbefehl bereitgestellt wurde;
Bestimmen basierend auf dem vierten Satz von Fahrzeugparametern, dass eine Untersteuerungsneigung des Fahrzeuggespanns (1) während des Antriebs höher ist als ein vordefinierter dritter Schwellenwert für die Untersteuerungsneigung; und
Bereitstellen eines zweiten Antriebsbefehls, der Anweisungen umsetzt, um die erste elektrische Maschine und die zweite elektrische Maschine zu steuern, um eine Antriebskraft an der hinteren Antriebsachse des Sattelschleppers (3) zu erhöhen und eine Antriebskraft an der Vorderachse (17) des Sattelschleppers (3) zu verringern, so dass die kombinierte Antriebskraft die Antriebsanforderung erfüllt.

7. Fahrzeuggespann (1), das das Computersystem nach einem der Ansprüche 1 bis 6 umfasst.

8. Fahrzeuggespann (1) nach Anspruch 7, wobei das Fahrzeuggespann (1) einen elektrisch angetriebenen Sattelschlepper (3) mit einer elektrischen Maschine umfasst, die an eine hintere Antriebsachse des Sattelschleppers (3) gekoppelt ist.

9. Fahrzeuggespann (1) nach Anspruch 7 oder 8, wobei das Fahrzeuggespann (1) einen elektrisch angetriebenen Sattelschlepper (3) mit einer ersten elektrischen Maschine, die an eine hintere Antriebsachse des Sattelschleppers (3) gekoppelt ist, und einer zweiten elektrischen Maschine, die an eine vordere Antriebsachse (17) des Sattelschleppers (3) gekoppelt ist, umfasst.

10. Computerimplementiertes Verfahren zum Verringern der Untersteuerung eines Fahrzeuggespanns (1), das einen elektrisch angetriebenen Sattelschlepper (3) mit einer elektrischen Maschine, die an eine hintere Antriebsachse des Sattelschleppers (3) gekoppelt ist, sowie einen Anhänger (5) enthält, der über eine Gelenkkupplung (7) an den Sattelschlepper (3) gekoppelt ist, wobei das Verfahren Folgendes umfasst:

Empfangen (401), durch ein Computersystem (23), einer Bremsanforderung zum Bremsen des Fahrzeuggespanns (1);

Bereitstellen (402), durch das Computersystem (23), eines ersten Bremsbefehls, der Anweisungen umsetzt, um die Bremsung an mindestens einer Vorderachse (17) des Sattelschleppers (3), an der hinteren Antriebsachse des Sattelschleppers (3) und an mindestens einer Achse (21) des Anhängers (5) zu steuern, um eine kombinierte Bremskraft bereitzustellen, die die Bremsanforderung erfüllt;

Empfangen (403), durch das Computersystem (23), eines ersten Satzes von Fahrzeugparametern;

Bestimmen (404) durch das Computersystem (23) basierend auf dem ersten Satz von Fahrzeugparametern, dass eine Untersteuerungsneigung des Fahrzeuggespanns (1) während der Bremsung höher ist als ein vordefinierter erster Schwellenwert für die Untersteuerungsneigung; und

Bereitstellen (405), durch das Computersystem (23), eines zweiten Bremsbefehls, der Anweisungen umsetzt, um eine Bremskraft an der hinteren Antriebsachse des Sattelschleppers (3) unter Verwendung von Rekuperation zu erhöhen, eine Bremskraft an der Vorderachse (17) des Sattelschleppers (3) zu verringern und eine Bremskraft an der mindestens einen Achse (21) des Anhängers (5) zu verringern, so dass die kombinierte Bremskraft die Bremsanforderung erfüllt.

**11.** Verfahren nach Anspruch 10, wobei das Verfahren ferner Folgendes umfasst:

Empfangen (701), durch das Computersystem (23), eines zweiten Satzes von Fahrzeugparametern, nachdem der zweite Bremsbefehl bereitgestellt wurde;

Bestimmen (702) durch das Computersystem (23) basierend auf dem zweiten Satz von Fahrzeugparametern, dass die Untersteuerungsneigung des Fahrzeuggespanns (1) während der Bremsung unter einem vordefinierten zweiten Schwellenwert für die Untersteuerungsneigung liegt, der niedriger ist als der erste Schwellenwert für die Untersteuerungsneigung; und

Bereitstellen (703), durch das Computersystem (23), eines dritten Bremsbefehls, der Anweisungen umsetzt, um die Bremskraft an der hinteren Antriebsachse des Sattelschleppers (3) zu verringern und die Bremskraft an der Vorderachse (17) des Sattelschleppers (3) zu erhöhen, so dass die kombinierte Bremskraft die Bremsanforderung erfüllt.

**12.** Computerprogrammprodukt, das Programmcode umfasst, um das Verfahren nach einem der Ansprüche 10 bis 11 durchzuführen, wenn er von der im Computersystem nach einem der Ansprüche 1 bis 9 enthaltenen Verarbeitungsschaltung ausgeführt wird.

**13.** Nichtflüchtiges, computerlesbares Speichermedium, das Anweisungen umfasst, die, wenn sie von der im Computersystem nach einem der Ansprüche 1 bis 9 enthaltenen Verarbeitungsschaltung ausgeführt werden, die Verarbeitungsschaltung dazu veranlassen, das Verfahren nach einem der Ansprüche 10 bis 11 durchzuführen.

## Revendications

**1.** Système informatique (23) comprenant des circuits de traitement (25) configurés pour :

recevoir une demande de freinage pour freiner une combinaison de véhicules (1) comprenant un tracteur (3) à propulsion électrique avec une machine électrique accouplée à un essieu moteur arrière du tracteur (3), et une remorque (5) accouplée au tracteur (3) par un attelage articulé (7) ;

émettre une première instruction de codage de commande de freinage pour commander le freinage sur au moins un essieu avant (17) du tracteur (3), sur l'essieu moteur arrière du tracteur (3) et sur au moins un essieu (21) de la remorque (5), afin de fournir une force de freinage combinée répondant à la demande de freinage ;

recevoir un premier ensemble de paramètres du véhicule ;

déterminer, sur la base du premier ensemble de paramètres du véhicule, qu'une tendance au sous-virage de la combinaison de véhicules (1) pendant le freinage est supérieure à un premier seuil de tendance au sous-virage prédéfini ; et

émettre une deuxième instruction de codage de commande de freinage pour augmenter une force de freinage sur l'essieu moteur arrière du tracteur (3) par régénération, diminuer une force de freinage sur l'essieu avant (17) du tracteur (3), et diminuer une force de freinage sur l'au moins un essieu (21) de la remorque (5), de sorte que la force de freinage combinée réponde à la demande de freinage.

**2.** Système informatique (23) selon la revendication 1, dans lequel le circuit de traitement (25) est en outre configuré pour :

recevoir un deuxième ensemble de paramètres du véhicule après avoir fourni la deuxième commande de freinage ;

déterminer, sur la base du deuxième ensemble de paramètres du véhicule, que la tendance au sous-virage de la combinaison de véhicules (1) pendant le freinage est inférieure à un deuxième seuil de tendance au sous-virage prédéfini, inférieure au premier seuil de tendance au sous-virage ; et

émettre une troisième instruction de codage de commande de freinage pour diminuer la force de freinage sur l'essieu moteur arrière du tracteur (3), et augmenter la force de freinage sur l'essieu avant (17) du tracteur (3), de sorte que la force de freinage combinée réponde à la demande de freinage.

3. Système informatique (23) selon l'une quelconque des revendications 1 à 2, dans lequel le circuit de traitement (25) est en outre configuré pour :

recevoir un troisième ensemble de paramètres du véhicule après avoir émis la deuxième commande de freinage ;

déterminer, sur la base du troisième ensemble de paramètres du véhicule, qu'une tendance au survirage de la combinaison de véhicules (1) pendant le freinage est supérieure à un seuil de tendance au survirage prédéfini ; et

émettre une quatrième instruction de codage de commande de freinage pour réduire la force de freinage sur l'essieu moteur arrière du tracteur (3).

4. Système informatique (23) selon la revendication 3, dans lequel la quatrième commande de freinage code en outre des instructions pour augmenter la force de freinage sur l'essieu avant (17) du tracteur (3) de sorte que la force de freinage combinée réponde à la demande de freinage.

5. Système informatique (23) selon la revendication 4, dans lequel la quatrième commande de freinage code en outre des instructions pour augmenter la force de freinage sur ledit au moins un essieu (21) de la remorque (5).

6. Système informatique (23) selon l'une quelconque des revendications 1 à 5, dans lequel le circuit de traitement (25) est en outre configuré pour :

recevoir une demande de propulsion pour propulser une combinaison de véhicules (1) comprenant un tracteur électrique (3) avec une première machine électrique couplée à un essieu moteur arrière du tracteur (3), une seconde machine électrique couplée à un essieu moteur avant (17) du tracteur (3), et une remorque (5) couplée au tracteur (3) par un attelage articulé (7) ;

émettre une première instruction de codage de commande de propulsion pour commander la première machine électrique et la seconde machine électrique pour fournir une force de propulsion combinée répondant à la demande de propulsion ;

recevoir un quatrième ensemble de paramètres du véhicule après avoir émis la première commande de propulsion ;

déterminer, sur la base du quatrième ensemble de paramètres du véhicule, qu'une tendance au sous-virage de la combinaison de véhicules (1) pendant la propulsion est supérieure à un troisième seuil prédéfini de tendance au sous-virage ; et

émettre une deuxième instruction de codage de commande de propulsion pour commander la première machine électrique et la seconde machine électrique afin d'augmenter une force de propulsion sur l'essieu moteur arrière du tracteur (3), et diminuer une force de propulsion sur l'essieu avant (17) du tracteur (3) de sorte que la force de propulsion combinée réponde à la demande de propulsion.

7. Combinaison de véhicules (1) comprenant le système informatique selon l'une quelconque des revendications 1 à 6.

8. Combinaison de véhicules (1) selon la revendication 7, la combinaison de véhicules (1) comprenant un tracteur (3) alimenté électriquement avec une machine électrique couplée à un essieu moteur arrière du tracteur (3).

9. Combinaison de véhicules (1) selon la revendication 7 ou 8, la combinaison de véhicules (1) comprenant un tracteur (3) alimenté électriquement avec une première machine électrique couplée à un essieu moteur arrière du tracteur (3), une seconde machine électrique couplée à un essieu moteur avant (17) du tracteur (3).

10. Procédé informatisé de réduction du sous-virage d'une combinaison de véhicules (1) comprenant un tracteur alimenté électriquement (3) avec une machine électrique couplée à un essieu arrière moteur du tracteur (3), et une remorque (5) accouplée au tracteur (3) par un attelage articulé (7), le procédé comprenant :

la réception (401), par un système informatique (23), d'une demande de freinage pour freiner la combinaison de véhicules (1) ;

l'émission (402), par le système informatique (23), d'une première commande de freinage codant des instructions pour commander le freinage sur au moins un essieu avant (17) du tracteur (3), sur l'essieu moteur arrière du tracteur (3), et sur au moins un essieu (21) de la remorque (5), pour fournir une force de freinage combinée répondant à la demande de freinage ;

la réception (403), par le système informatique (23), d'un premier ensemble de paramètres du véhicule ;

la détermination (404), par le système informatique (23), sur la base du premier ensemble de paramètres du véhicule, qu'une tendance au sous-virage de l'ensemble véhicule (1) pendant le freinage est supérieure à un premier seuil prédéfini de tendance au sous-virage ; et

l'émission (405), par le système informatique (23), d'une deuxième commande de freinage codant des instructions pour augmenter une force de freinage sur l'essieu moteur arrière du tracteur (3) par régénération, diminuer une force de freinage sur l'essieu avant (17) du tracteur (3), et diminuer une force de freinage sur l'au moins un essieu (21) de la remorque (5), de sorte que la force de freinage combinée réponde à la demande de freinage.

11. Procédé selon la revendication 10, le procédé comprenant en outre :

la réception (701), par le système informatique (23), d'un second ensemble de paramètres du véhicule après avoir émis la deuxième commande de freinage ;

la détermination (702), par le système informatique (23), sur la base du second ensemble de paramètres du véhicule, que la tendance au sous-virage de la combinaison de véhicules (1) pendant le freinage est inférieure à un second seuil de tendance au sous-virage prédéfini, inférieur au premier seuil de tendance au sous-virage ; et

l'émission (703), par le système informatique (23) d'une troisième commande de freinage codant des instructions pour diminuer la force de freinage sur l'essieu moteur arrière du tracteur (3), et augmenter la force de freinage sur l'essieu avant (17) du tracteur (3) de sorte que la force de freinage combinée réponde à la demande de freinage.

12. Produit de programme informatique comprenant un code de programme pour exécuter, lorsqu'il est exécuté par le circuit de traitement compris dans le système informatique selon l'une quelconque des revendications 1 à 9, le procédé selon l'une quelconque des revendications 10 à 11.

13. Support de stockage non transitoire lisible par ordinateur comprenant des instructions qui, lorsqu'elles sont exécutées par le circuit de traitement compris dans le système informatique selon l'une quelconque des revendications 1 à 9, amènent le circuit de traitement à exécuter le procédé selon l'une quelconque des revendications 10 à 11.

*Fig. 1*

*Fig. 2*

*Fig. 3*

Receive braking request — 401

Provide 1st braking command — 402

Receive 1st set of vehicle parameters — 403

Understeer above $TH_1$ — 404

Provide 2nd braking command — 405

Fig. 4

Fig. 5

37

39

*Fig. 6*

Continued
from fig. 4

↓

| Receive 2nd set of vehicle parameters | ~ 701 |
|---|---|

↓

| Understeer below $TH_2$ | ~ 702 |
|---|---|

↓

| Provide 3rd braking command | ~ 703 |
|---|---|

*Fig. 7*

*Fig. 8*

Continued
from fig. 4

↓

| Receive 3rd set of vehicle parameters | ⟩ 901 |

↓

| Oversteer above threshold | ⟩ 902 |

↓

| Provide 4th braking command | ⟩ 903 |

*Fig. 9*

*Fig. 10*

*Fig. 11*

**EP 4 541 671 B1**

**REFERENCES CITED IN THE DESCRIPTION**

**Patent documents cited in the description**

- DE 102019200820 A1
- US 7093912 B2
- US 10336195 B2
- US 10131330 B2
- US 6668225 B2